Europäisches Patentamt

European Patent Office

Office européen des brevets

(11) Veröffentlichungsnummer: **0 116 973**

**A1**

## (12) EUROPÄISCHE PATENTANMELDUNG

(21) Anmeldenummer: **84101687.6**

(22) Anmeldetag: **17.02.84**

(51) Int. Cl.³: **G 11 B 23/04**

(30) Priorität: **19.02.83 DE 3305899**

(43) Veröffentlichungstag der Anmeldung:
**29.08.84 Patentblatt 84/35**

(84) Benannte Vertragsstaaten:
**AT BE CH FR GB IT LI LU NL SE**

(71) Anmelder: **Terracota Caribbean Corp.
Torre Banco Germanico
Panama 5(PA)**

(72) Erfinder: **Schäfter, Dieter W.
Gustav-Werner-Strasse 2
Bönnigheim(DE)**

(74) Vertreter: **Kressin, Horst-Rüdiger, Dr. et al,
DIEHL & KRESSIN Flüggenstrasse 17
D-8000 München 19(DE)**

(54) **Aus mehreren Teilen zusammensetzbare Bandkassette.**

(57) Die Erfindung betrifft eine aus mindestens zwei Teilen über Befestigungsmittel miteinander verbundene Videokassette, bei der wenigstens eines der die Teile zusammenhaltenden Befestigungsmittel aus einem nicht lösbaren Schraubverbindungs-, Steckverbindungs- oder Nietverbindungsmittel besteht. Die Erfindung betrifft auf diese Weise gegen unerwünschtes Öffnen gesicherte Videokassetten, insbesondere einfarbige oder mehrfarbige, bespielte Videofilme enthaltende Kassetten.

FIG. 1

EP 0 116 973 A1

0116973

## Videokassette

## Beschreibung

Die Erfindung betrifft Videokassetten, die aus mehreren, insbesondere zwei Teilen, zusammengesetzt sind, wobei die Teile über Schraubverbindungen oder Steckverbindungen fest miteinander verbunden sind und wobei sich die einmal miteinander verbundenen Teile der Kassette nicht mehr willkürlich öffnen lassen. Die Neuerung betrifft insbesondere eine gegen unerwünschtes Öffnen geschützte Videokassette, bei der die die Teile verbindenden Schraubverbindungen bzw. Steckverbindungen nach dem Eindrehen bzw. Einschnappen nicht mehr lösbar oder nur noch mit einem Spezialwerkzeug lösbar sind.

Die bekannten Videokassetten bestehen aus zwei Hälften, und zwar dem Unterteil und dem Oberteil, wobei das Oberteil mittels Schrauben mit dem Unterteil fest verbindbar ist. Diese Kassetten haben den Nachteil, daß man sie mit Hilfe eines Schraubenziehers ohne weiteres öffnen kann und dann den darin enthaltenen bespielten Videofilm entnehmen kann. Es besteht daher das Bedürfnis nach bespielten Videokassetten, die nicht ohne weiteres geöffnet werden können und bei denen nicht die Möglichkeit besteht, daß der Originalfilm herausgenommen wird und durch eine Kopie ausgetauscht wird. Das Bedürfnis nach derartigen Kassetten besteht insbesondere bei Unternehmen, die Videokassetten mit bespielten Filmen verleihen.

Die Erfindung betrifft daher Videokassetten mit bespielten Videofilmen, die gegen unerwünschtes Öffnen durch nicht lösbare Schraubverbindungen oder Steckverschlüsse gesichert sind, insbesondere auf diese Weise gesicherte ein- oder mehrfarbige Videokassetten, z.B. in rot, grün, gelb, blau, weiß und/oder orange.

Die beiden Kassettenhälften sind vorzugsweise durch Schrauben miteinander verbunden, wobei mindestens eine der Schrauben aus einer Abreißschraube besteht, die sich leicht in das vorgesehene Gewinde einschrauben läßt, jedoch beim Herausschrauben abbricht. Die Abreißsicherungsschraube ist quer und schräg zu ihrer Längsachse mit einem Einschnitt als Sollbruchstelle ausgerüstet, an der die Schraube beim Herausdrehen der Schraube bricht. Beim Eindrehen der Schraube sind die beiden gegenüber angeordneten Schnittflächen des Einschnitts in Wirkeingriff zueinander angeordnet, so daß in diesem Fall ein Einschrauben der Schraube ohne einen Bruch der Sollbruchstelle möglich ist. Der Einschnitt erstreckt sich von der Seitenfläche der Schraube bis über die Mittelachse der Schraube hinaus, so daß mindestens 70 % der Querschnittsfläche durch den Einschnitt voneinander getrennt sind. Die Abreißschraube besteht vorzugsweise aus gehärtetem Stahl oder aus Hartkunststoff. Der schräge Einschnitt ist vorzugsweise im oberen Teil in unmittelbarer Nähe des Schraubenkopfes angeordnet, damit die beiden Kassettenhälften auch nach dem Abdrehen des Schraubenkopfes fest miteinander verbunden sind.

Nach einer Ausgestaltung der Neuerung sind die Videokassetten mit Abreißschrauben gesichert, die längs ihrer Mittelachse eine zum Schraubenkopf hin offene Mehrkantbohrung aufweisen. Die Mehrkantbohrung besteht vorzugsweise aus einer Dreikant-, Vierkant-, Fünfkant- oder Sechskantbohrung, in die ein Imbusschlüssel einführbar ist. Die Mehrkantbohrung erstreckt sich vom Kopfende der Schraube bis über den schrägen, seitlichen Einschnitt hinaus, so daß die beiden Schraubenteile kraftschlüssig miteinander verbunden sind, wenn der Imbusschlüssel in die Mehrkantbohrung eingeführt ist. Der Kopf der Abreißschraube kann entweder mit einem Schlitz ausgerüstet sein, der das Einschrauben der Schraube in die vorgesehene Ausnehmung der jeweiligen Kassettenhälfte erlaubt. Der Kopf der Abreißschraube kann jedoch auch halbrund ausgebildet sein oder flach ausgebildet sein, wobei der Kopf in der Mitte nur die Öffnung der Mehrkantbohrung aufweist. In diesem Fall kann die Abreißschraube nur mit dem entsprechenden Imbusschlüssel festgedreht und gelöst werden.

Die Abreißschrauben, die mit einer Mehrkantbohrung in Mittelachsrichtung ausgerüstet sind, haben den Vorteil, daß die damit ausgerüsteten Kassetten, z.B. zum Zwecke von Reparaturarbeiten, mit einem Spezialwerkzeug geöffnet werden und wieder geschlossen werden können.

Zur weiteren Sicherung kann auf die Abreißschrauben mit der Mehrkantbohrung noch eine Niete aufgesetzt werden, die die Öffnung der Mehrkantbohrung im Schraubenkopf abdeckt, so daß die Schraubenverbindung zwischen den beiden Kassettenhälften von außen nicht erkennbar ist.

Nach einer weiteren Ausgestaltung der Neuerung sind die Kassettenteile über eine nicht lösbare Schraube miteinander verbunden, bei der der Schraubenkopf so ausgestaltet ist, daß die Schraube zwar eindrehbar, aber nicht mehr aus dem Gewinde der zweiten Kassettenhälfte herausdrehbar ist. Der Schraubenkopf dieser Schraube weist zwei Erhöhungen auf, die seitlich neben dem Schlitz des Schraubenkopfes angeordnet sind, und zwar so, daß sie versetzt gegeneinander angeordnet sind. Die Erhöhungen haben etwa Kegelform mit drei Flächen, wobei die zum Schlitz des Schraubenkopfes angeordnete Fläche senkrecht ausgebildet ist, so daß der in den Schlitz des Schraubenkopfes eingesetzte Schraubenzieher beim Eindrehen der Schraube zwei entsprechende Widerstandsflächen besitzt. Die senkrecht zum Schlitz angeordneten Flächen der Erhöhungen sind konkav abgerundet, so daß der in den Schlitz des Schraubenkopfes eingesetzte Schraubenzieher beim Versuch des Herausdrehens der Schraube auf diesen konkav gewölbten Flächen abrutscht bzw. aus dem Kopf der Schraube herausgleitet.

Nach einer weiteren Ausgestaltung der Neuerung können die Kassettenteile auch über eine Steck- oder Nietverbindung fest miteinander verbunden werden. Die Kassettenhälften werden nach dem Einlegen des bespielten Videofilms paßgenau aufeinandergelegt und dann zusammengedrückt, wobei der Niet insbesondere mittels Ultraschallbehandlung erwärmt wird und auf diese Weise der Niet mit den Kunststoffteilen der Kassette verschweißt wird. Der Niet ist zur besseren Halterung insbesondere mit Riefen, Querrillen oder Vorsprüngen versehen. Die auf diese Weise geschlossenen Videokassetten können nur unter Zerstörung der Niet- oder Steckverbindungen geöffnet werden.

Bei den einfarbigen oder mehrfarbigen Videokassetten ist zumindest der Boden der in die Oberfläche der Kassette eingelassenen Vertiefung, in die der Lichtstrahl einer Lichtquelle des Videorecorders als Startsignal für den Transport des Videofilms eingeleitet wird, lichtundurchlässig ausgebildet. Dies erfolgt z.B: durch Bestreichen des Bodens der Vertiefung mit lichtundurchlässigem Lack oder Anstrich oder durch Auflegen eines undurchsichtigen Plättchens, z.B. aus Kunststoff, Papier oder Metall auf den Boden der Vertiefung in der Kassettenseitenfläche.

Der auf diese Weise lichtundurchlässig gemachte Boden der Vertiefung unterbricht den auf den Boden fallenden

-5-

Lichtstrahl und löst so ein Signal aus. Bei hellfarbenen Videokassetten ohne Einlage in der Vertiefung strahlt der Lichtstrahl durch den Boden der Vertiefung hindurch und der Strahl wird somit durch die in den Videorecorder eingelegte Kassette nicht oder nicht vollständig genug unterbrochen.

Die Neuerung wird anhand der beigefügten Zeichnungen näher erläutert. Es zeigen:

Fig. 1    eine Videokassette in der Draufsicht mit sechs Schraub- bzw. Schnappverbindungen,

Fig. 2    eine Schraubsicherung mit Einschnitt,

Fig. 3    eine Schraubsicherung mit Einschnitt und Mehrkantbohrung längs der Mittelachse,

Fig. 4    einen Nippel zum Abdecken des Schraubenkopfes gemäß Fig. 3,

Fig. 5    den Kopf einer weiteren Schraubensicherung in der Draufsicht,

Fig. 6    die Sicherungsschraube nach Fig. 5 in der seitlichen Draufsicht, und

Fig. 7    zwei Kassettenteile mit Nietverbindung

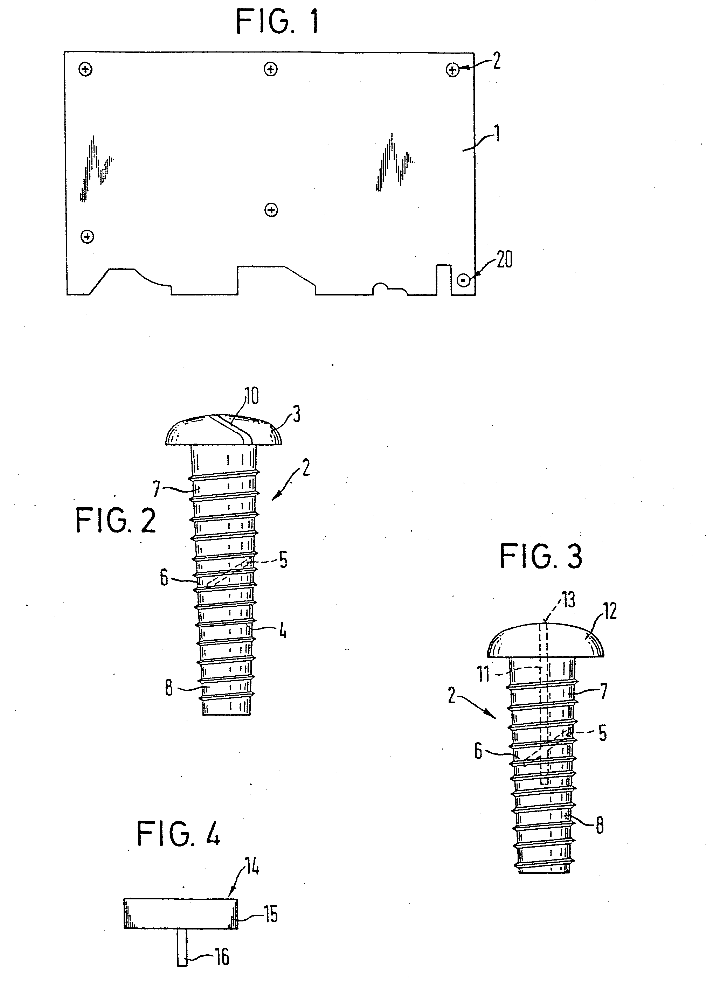

Fig. 1 zeigt die Draufsicht auf eine Kassette 1 mit sechs Sicherungsschrauben bzw. Sicherungsschnappverbindungen 2. Die Kassettenteile sollten zur Sicherung gegen unerlaubtes Öffnen mindestens mit einer nicht lösbaren Sicherungsverbindung ausgerüstet sein.

Fig. 2 zeigt eine Abreißschraube 2 mit dem Schraubenkopf 3, dem Gewindeteil 4 und dem strichliniert dargestellten Einschnitt 5. Der Einschnitt 5 durchquert den Gewindeteil von der Seitenfläche ausgehend bis weit über den Bereich der Mittelachse der Schraube hinaus, so daß an dem Ende, das dem Beginn des Einschnitts gegenüberliegt, eine Sollbruchstelle 6 zwischen dem oberen Teil 7 und dem unteren Teil 8 bestehenbleibt, die die beiden Teile der Schraube verbindet. Der Kopf 3 der Schraube 2 ist mit einem Schlitz 10 ausgerüstet.

Nach einer weiteren Ausgestaltung kann die Sicherungs- bzw. Abreißschraube 2 auch längs der Mittelachse mit einer Mehrkantbohrung 11 ausgerüstet sein, die insbesondere aus einer Dreikant-, Vierkant-, Fünfkant- oder Sechskantbohrung besteht. Bei der Ausführung gemäß Fig. 3 ist der Kopf 12 der Schraube nur mit der Mehrfachbohrung ausgerüstet, so daß zum Einschrauben bzw. Herausschrauben der Schraube ein entsprechend ausgebildeter Imbusschlüssel verwendet werden muß. Die Mehrkantbohrung 11 erstreckt sich vom Kopf der Schraube bis über den Einschnitt 5 hinaus, so daß beim Einführen des Imbusschlüssels der obere Teil 7 mit dem unteren Teil 8 der Schraube kraftschlüssig miteinander verbunden sind. Nur beim Einführen eines entsprechend lang ausgebildeten Imbusschlüssels kann die Schraube gemäß Fig. 3 aus der entsprechenden Halterung herausgeschraubt werden, ohne daß die Sollbruchstelle zwischen dem Ende des Einschnitts 5 und der Seitenfläche des Gewindeteils der Schraube 2 bricht.

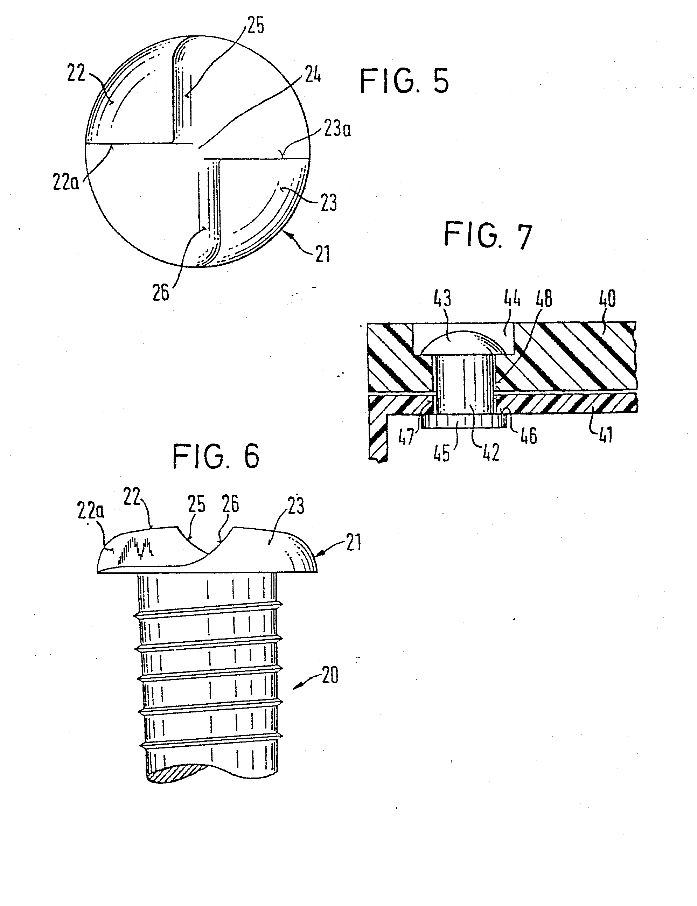

In die Öffnung 13 der Mehrkantbohrung 11 kann ein Nippel 14 eingesetzt werden, der den Schraubenkopf nach oben abdeckt. Der Nippel 14 besteht aus einer scheibenförmigen Abdeckplatte 15 und einem einstückig mit der Scheibe verbundenen Stift 16, der in der Mittelachse des Nippels angeordnet ist. Die Fig. 5 und 6 zeigen eine Sicherungsschraube, bei der der Kopf der Schraube so ausgebildet ist, daß das Einschrauben der Schraube mittels eines Schraubenziehers in die vorgesehene Bohrung der Kassettenhälfte möglich ist, jedoch das Herausschrauben in der entgegengesetzten Drehrichtung verhindert wird, da der Schraubenzieher aus dem Kopf der Schraube herausrutscht. Die Sicherungsschraube 20 ist mit einem Schraubenkopf 21 ausgerüstet, der zwei Erhöhungen 22 und 23 aufweist, die neben dem Schlitz 24 des Schraubenkopfes angeordnet sind. Der Schlitz 24 wird gebildet durch die senkrechte Fläche 22a der Erhöhung 22 und die senkrechte Fläche 23a der Erhöhung 23 entlang der Linie des Schlitzes. Die beiden Erhöhungen 22 und 23 sind diagonal gegenüber in Form eines dreiflächigen Kegels angeordnet. Die senkrecht zum Schlitz 24 angeordnete Fläche der Erhöhung 22 ist als konkav ausgebildete Abrutschfläche 25 ausgebildet. Analog dazu ist die vom höchsten Punkt der Erhebung 23 aus sich erstreckende Abrutschfläche 26 ebenfalls konkav ausgebildet. Wie aus den Fig. 5 und 6 ersichtlich ist, rutscht der Schraubenzieher beim Versuch, die Schraube im vorliegenden Fall durch eine Linksdrehung aus der Halterung herauszuschrauben, auf den Flächen 25 bzw. 26 entlang, bis der Schraubenschlüssel das Ende der Flächen 25 bzw. 26 erreicht und aus dem Kopf 21 der Sicherungsschraube 20 herausrutscht. Auch diese Sicherungsschraube besteht vorzugsweise aus gehärtetem Stahl oder aus Hartkunststoff.

Fig. 7´ zeigt ein oberes Kassettenteil 40 und ein unteres Kassettenteil 41, die durch eine Nietverbindung 42 miteinander verbunden sind. Der Nietkopf 43 ist in einer Versenkung 44 des oberen Kassettenteils 40 gelagert. Der dem Nietkopf gegenüber angeordnete Rand 45 des Niets ist am umlaufenden Rand 46 der Öffnung 47 des unteren Kassettenteils 41 gelagert. Der Außendurchmesser des Niets entspricht vorzugsweise dem Innendurchmesser der Öffnung 47 des unteren Kassettenteils und der Öffnung 48 des oberen Kassettenteils 40. Der Niet 42 kann auch ohne Rand 45 ausgebildet sein. In diesem Fall ist die Oberfläche des Niethalses mit Rillen oder Erhöhungen ausgebildet und der Niet wird in diesem Fall durch Ultraschallbehandlung erwärmt und so mit den Kunststoffkassettenteilen 40, 41 verschweißt.

DrK/we

Terracota Caribbean Corp.
Panama 5        Panama


Aus mehreren Teilen zusammensetzbare Bandkassette


Schutzansprüche


1. Aus mehreren Teilen zusammensetzbare  und über mindestens
   ein nicht lösbares Befestigungsmittel miteinander verbundene
   Bandkassette,
   d a d u r c h   g e k e n n z e i c h n e t ,
   daß die Bandkassette eine Videokassette ist und daß das
   nicht lösbare Befestigungsmittel aus einer Abreißschraube (2),
   einer nicht lösbaren Schraube (20), bei der der Schraubenkopf so ausgebildet ist, daß die Schraube zwar eindrehbar,
   aber nicht mehr aus dem Gewinde der zweiten Kassettenhälfte
   herausdrehbar ist oder einem Niet besteht.


2. Videokassette nach Anspruch 1, dadurch gekennzeichnet, daß
   die Abreißschraube (2) mit einem schräg zur Längsachse der
   Schraube ausgerüsteten Einschnitt (5) als Sollbruchstelle,
   an der die Schraube beim Herausnehmen bricht, versehen ist.

- 2 -

0116973

3. Videokassette nach einem der Ansprüche 1 oder 2, dadurch gekennzeichnet, daß der Einschnitt (5) sich von der Seitenfläche des Gewindeteils (4) der Schraube (2) über die Mittelachse der Schraube hinaus erstreckt.

4. Videokassette nach einem der vorhergehenden Ansprüche, dadurch gekennzeichnet, daß der Einschnitt (5) sich mindestens über 70 % der Querschnittsfläche der Schraube (2) erstreckt.

5. Videokassette nach einem der vorhergehenden Ansprüche, dadurch gekennzeichnet, daß die Schraube (2, 20) aus gehärtetem Stahl oder Hartkunststoff besteht.

6. Videokassette nach einem der vorhergehenden Ansprüche, dadurch gekennzeichnet, daß die Abreißschraube (2) mit einer am Kopf der Schraube beginnenden und sich längs der Mittelachse erstreckenden Mehrkantbohrung ausgerüstet ist, die sich über den seitlichen Einschnitt (5) hinaus bis in den unteren Gewindeteil (8) der Schraube (2) hineinerstreckt.

7. Videokassette nach Anspruch 6, dadurch gekennzeichnet, daß die Mehrkantbohrung (11) eine Dreikant-, Vierkant-, Fünfkant- oder Sechskantbohrung ist, in die ein von oben in die Bohrung einführbarer Imbusschlüssel, der die beiden Gewindeteile (7 und 8) der Schraube kraftschlüssig überbrückt, einsetzbar ist.

8. Videokassette nach einem der Ansprüche 6 oder 7,
   dadurch gekennzeichnet, daß die Öffnung (13) der
   Mehrkantbohrung (11) im Schraubenkopf (12) mit
   einem aufsetzbaren Nippel (14) abdeckbar ist.

9. Videokassette nach Anspruch 1, dadurch gekennzeichnet,
   daß die nicht lösbare Schraube (20) einen Schraubenkopf (21)
   mit zwei Erhöhungen (22, 23) aufweist, die zur Mittelachse (24) des Schraubenkopfes parallel angeordnete
   Flächen (22a, 23a) aufweisen und die eben und senkrecht
   ausgebildet sind und senkrecht zur Mittelachse (24) des
   Schraubenkopfes sich erstreckende Flächen (25, 26) aufweisen, die als konkav ausgebildete Abrutschebenen ausgebildet sind (siehe Fig. 4 und 5).

10. Videokassette nach Anspruch 9, dadurch gekennzeichnet,
    daß die Erhöhungen (22, 23) des Schraubenkopfes neben
    dem für die Einführung des Schraubenziehers vorgesehenen
    Schlitz in Richtung der Mittelachse (24) des Schraubenkopfes und diagonal gegenüber versetzt angeordnet sind.

11. Videokassette nach Anspruch 9, dadurch gekennzeichnet,
    daß die senkrechten,ebenen Flächen (22a, 23a) der Erhöhungen (22, 23) das Einschrauben der Schraube in die
    vorgesehene Bohrung ermöglichende Haltefläche für den in
    den Schlitz (24) des Schraubenkopfes einsetzbaren Schraubenzieher bilden und die konkav ausgebildeten Flächen
    den Schraubenzieher bei der entgegengesetzten Drehrichtung
    aus dem Kopf (21) der Schraube (20) herausgleitende Ab-
    rutschflächen (25, 26) bilden.

0116973

12. Videokassette nach Anspruch 1, dadurch gekennzeichnet,
daß die Kassettenhälften aus einem einfarbigen oder mehrfarbigen Kunststoff bestehen und der Boden der Vertiefung
in der Kassettenhälfte, in die ein Lichtstrahl als Startsignal für den Transport des Videofilms gesandt wird, lichtundurchlässig ausgebildet ist.

FIG. 1

FIG. 2

FIG. 3

FIG. 4

2/2

0116973

FIG. 5

FIG. 7

FIG. 6

**Europäisches Patentamt**

**EUROPÄISCHER RECHERCHENBERICHT**

0116973
Nummer der Anmeldung

## EINSCHLÄGIGE DOKUMENTE

EP 84101687.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US - A - 4 125 051 (HERKES) <br> * Fig. 1-6; Zusammenfassung * | 1,9-11 | G 11 B 23/04 |
| A | AT - B - 356 924 (EUMIG) <br> * Fig. 1,2; Ansprüche 1,2 * | 1 | |
| A | DE - A1 - 3 014 015 (MINNESOTA MINING) <br> * Fig. 1-6; Seite 12, Zeilen 28,29 * | 1 | |
| A | US - A - 4 079 499 (BAGOZZI) <br> * Fig. 1-8; Zusammenfassung * | 1 | |
| A | CH - A5 - 585 857 (GERHARD) <br> * Fig. 1-3; Ansprüche 1,2 * | 8 | **RECHERCHIERTE SACHGEBIETE (Int. Cl. ³)** <br><br> G 11 B 23/00 <br> F 16 B 23/00 <br> B 23 P 11/00 <br> F 16 B 35/00 <br> F 16 B 37/00 <br> F 16 B 39/00 |

Der vorliegende Recherchenbericht wurde für alle Patentansprüche erstellt.

| Recherchenort | Abschlußdatum der Recherche | Prüfer |
|---|---|---|
| WIEN | 27-04-1984 | BERGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82